# EUROPÄISCHE PATENTANMELDUNG

(11) **EP 1 376 402 A2**
(43) Veröffentlichungstag der Anmeldung: **02.01.2004**
(21) Anmeldenummer: 03013599.0
(22) Anmeldetag: 16.06.2003
(51) Int. Cl.: G06F 17/30

(54) **System zur Visualisierung eines Portfolios**

(30) Priorität: 25.06.2002 DE 10228262
(71) Anmelder: Bayer Aktiengesellschaft, 51368 Leverkusen (DE)
(72) Erfinder: Arndt, Wolfgang, 40764 Langenfeld (DE); Hilden, Heinz-Josef, 50735 Köln (DE); Pourie, Norbert, 51067 Köln (DE); Steinbock, Roseli, 51373 Leverkusen (DE)

(57) **Zusammenfassung**

Die Erfindung betrifft ein System zur Visualisierung eines Portfolios enthaltend einen computerlesbaren Datenspeicher mit einem Datenbanksystem. In dem Datenbanksystem sind Basisobjekte gespeichert, die jedes eindeutig mit einem oder mehreren Basisdaten verknüpft sind. Die Basisobjekte sind einer oder mehreren Struktureinheiten in einem multidimensionalen hierarchischen Modell eines Unternehmens oder einer Institution zugeordnet. Die Struktureinheiten sind in einer relationalen Datenbank gespeichert. Die Basisobjekte, die den einzelnen Struktureinheiten zugeordnet sind, können selektiv oder insgesamt mit einem oder mehreren Basisdaten visualisiert werden. Bei den Basisobjekten kann es sich um Patentanmeldungen/Patente, Verträge oder Produkte handeln.

## Beschreibung

Die Erfindung betrifft ein System zur Visualisierung eines Portfolios unter Berücksichtigung der Struktureinheiten eines Unternehmens oder einer Institution, die in einem multidimensionalen hierarchischen Modell des Unternehmens oder der Institution abgebildet werden.

In dezentral organisierten Unternehmen oder Institutionen ist es von Vorteil, wenn die verschiedenen Portfolios, wie Patentportfolio, Vertragsportfolio oder Produktportfolio, die Unternehmensbeteiligungen oder Organisationseinheiten zuzuordnen sind, zentral visualisiert und über die Unternehmensbeteiligung oder die Organisationseinheit hinaus zugänglich gemacht werden können. Diese Visualisierung erlaubt es, dass zentrale strategische Entscheidungen getroffen werden können und eine effektive Kollisionskontrolle vorgenommen werden kann.

Die erfindungsgemäße Aufgabe besteht darin eine Möglichkeit zu schaffen, die dezentral in den Unternehmensbeteiligungen oder Organisationseinheiten eines Unternehmens oder einer Institution vorhandenen Portfolios zu visualisieren.

Die Lösung der erfindungsgemäßen Aufgabe besteht in einem System zur Visualisierung eines Portfolios enthaltend einen computerlesbaren Datenspeicher mit einem Datenbanksystem. In dem Datenbanksystem sind Basisobjekte gespeichert, die jedes eindeutig mit einem oder mehreren Basisdaten verknüpft sind. Die Basisobjekte sind einer oder mehreren Struktureinheiten in einem multidimensionalen hierarchischen Modell eines Unternehmens oder einer Institution zugeordnet. Die Struktureinheiten sind in einer relationalen Datenbank gespeichert. Die Basisobjekte, die den einzelnen Struktureinheiten zugeordnet sind, können selektiv oder insgesamt mit einem oder mehreren Basisdaten visualisiert werden.

Es kann der Fall auftreten, dass nicht alle Nutzer des erfindungsgemäßen Datenbanksystems Zugang zu allen Basisobjekten mit ihren Basisdaten erhalten sollen. In diesem Fall können in dem Datenbanksystem ein oder mehrere Nutzer gespeichert und jeweils einer oder mehreren der gespeicherten Struktureinheiten zugeordnet werden. Diesen Nutzern ist nur die selektive Visualisierung von Basisobjekten möglich ist, die zu den Struktureinheiten gehören, die diesen Nutzern zugeordnet sind.

Ein Basisobjekt kann mit einem oder mehreren anderen Basisobjekten verknüpft sein.
Verschiedene Basisobjekte können mit demselben Basisdatum verknüpft sind.

Die Basisobjekte können zum Beispiel Patentanmeldungen/Patente, Verträge oder Produkte sein.

Wenn die Basisobjekte Patentanmeldungen/Patente sind, dann können die Basisdaten bibliographische Daten zu den Patentanmeldungen/Patenten sein, wie Prioritätsdaten, Länder in den angemeldet wurde und für diese Länder jeweils Anmeldenummer und -datum, Veröffentlichungsnummer und -datum, Erteilungsnummer und -datum, Fälligkeitsdatum für Patentgebühren, Laufzeiten, Patentablaufdaten, Prüfungsantragsdaten, Information ob Einspruch oder Beschwerde eingelegt wurde, Löschdatum, Anmelder und/oder Erfinder. Weitere Basisdaten zu Patentanmeldungen/Patenten können Informationen zur Organisation und Abrechnung von Aktivitäten zu Patentanmeldungen/Patenten innerhalb des Unternehmens oder der Institution sein, wie Entscheidungsgremien und deren Beschlüsse, interne Entscheidungstermine, Produkte für die Erfindervergütung gezahlt wird, Kontierungen für die Abrechnung der Kosten, zuständiger Patentanwalt oder Referent und/oder Status der gesamten Patentfamilie (in Kraft, abgelaufen, fallengelassen...).

Wenn die Basisobjekte Verträge sind, dann können die Basisdaten zum Beispiel folgende Daten umfassen: Vertragsart, Lizenzart, Vertragspartner, Leistungsgeber/Leistungsempfänger, Vertragsbeginn, Vertragsende, Unterschriftsdaten, Gegenstand des Vertrags, Vertragsstatus (z.B. in Kraft, beendet...), Vertragssprache, betroffene Länder.

Wenn die Basisobjekte Produkte sind, dann können die Basisdaten Daten zu den Produkten wie Umsätze oder Gewinne sein.

Die Basisdaten können hierarchieunabhängig oder hierarchieabhängig sein. Hierarchieabhängige Basisdaten werden zu den Basisobjekten abhängig davon visualisiert, in Verknüpfung mit welcher Struktureinheit die Basisobjekte selber visualisiert werden. Wenn es sich bei den hierarchieabhängigen Basisdaten z.B. um sensible Geschäftsdaten einer ersten Beteiligungsgesellschaft in der ökonomischen Strukturierung handelt, und ein Basisobjekt z.B. verschiedenen Beteiligungsgesellschaften gleichzeitig zugeordnet ist, dann können die hierarchieabhängigen Basisdaten nur visualisiert werden, wenn das Basisobjekt über die der ersten Beteiligungsgesellschaft zugeordnete Struktureinheit, aufgerufen wird.

Hierarchieunabhängige Basisdaten hingegen können unabhängig von der zugeordneten Struktureinheit immer visualisiert werden, wenn das zugehörige Basisobjekt visualisiert wird.

Das multidimensionale hierarchische Modell kann zum Beispiel eine wissenschaftlich/technisch bedingte Strukturierung einerseits und eine ökonomisch bedingte Strukturierung des Unternehmens oder der Institution andererseits abbilden. Die wissenschaftlich/technisch bedingte Strukturierung kann eine Strukturierung nach bestimmten Produktgruppen, Anwendungs- oder Einsatzgebieten, Indikationen, Forschungsgebieten sein. Die ökonomisch bedingte Strukturierung kann eine Strukturierung nach nationalen und/oder internationalen Beteiligungsunternehmen oder Beteiligungsgesellschaften zu einem Unternehmen oder einer Institution und/oder eine Strukturierung nach betriebswirtschaftlichen Organisationseinheiten wie Einkauf, Marketing, Produktion sein.

Der computerlesbare Datenspeicher befindet sich bevorzugt in einem Zentralrechner, der mit einem oder mehreren Nutzer-Terminals verbunden ist. Die Nutzer-Terminals weisen mindestens eine Eingabeeinrichtung und eine Anzeigeeinrichtung zur Visualisierung der selektierten Basisobjekte auf und sind so mit dem Zentralrechner verbunden, dass elektronisch Daten zwischen dem Zentralrechner und den Nutzer-Terminals ausgetauscht werden können.

### Figuren und Beispiele

### Es zeigen

- Fig. 1: Systemarchitektur Client/Server
- Fig. 2: Systemarchitektur Citrix-Server
- Fig. 3: Ausschnitt des Datenmodells für hierarchieabhängige Daten
- Fig. 4: Visualisierung einer Struktureinheiten-spezifischen, hierarchischen Datenstrukturierung mit zugeordneten Basisobjekten
- Fig. 5: Visualisierung von hierarchieabhängigen Basisdaten
- Fig. 6: Visualisierung der hierarchieunabhängigen Basisdaten
- Fig. 7: Ausschnitt des Datenmodells für Patente als Basisobjekte
- Fig. 8: Ausschnitt des Datenmodells für Verträge als Basisobjekte
- Fig. 9: Visualisierung einer Auswahl von Patenten als Basisobjekten
- Fig. 10: Drill-down Menü zu Basisobjekt Patent
- Fig. 11 1: Visualisierung von Drill-down Ziel "Länder"
- Fig. 12: Visualisierung von Drill-down Ziel "Erfinder"
- Fig. 13: Visualisierung einer Auswahl von Patenten als Basisobjekten mit bestimmtem Erfinder

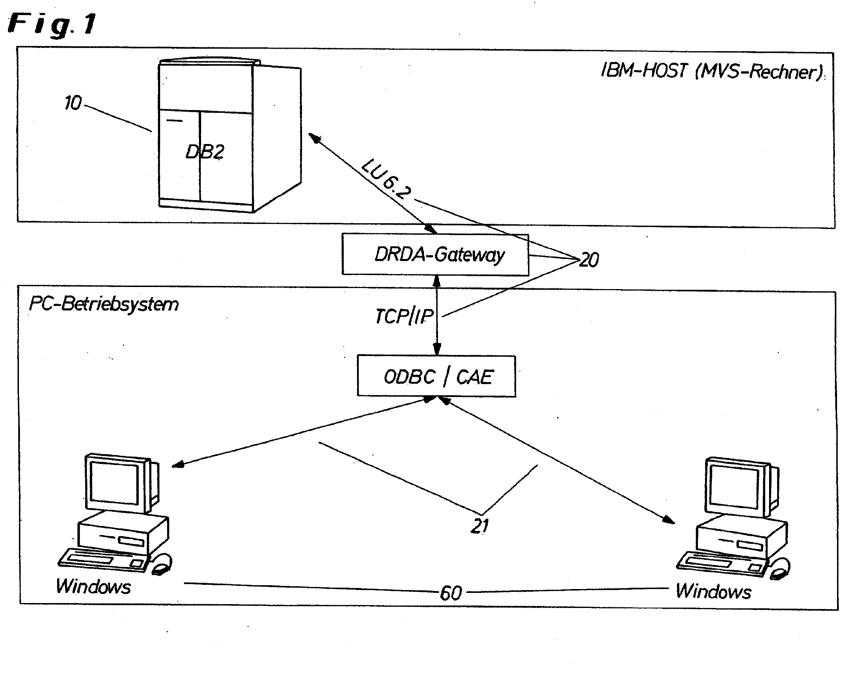

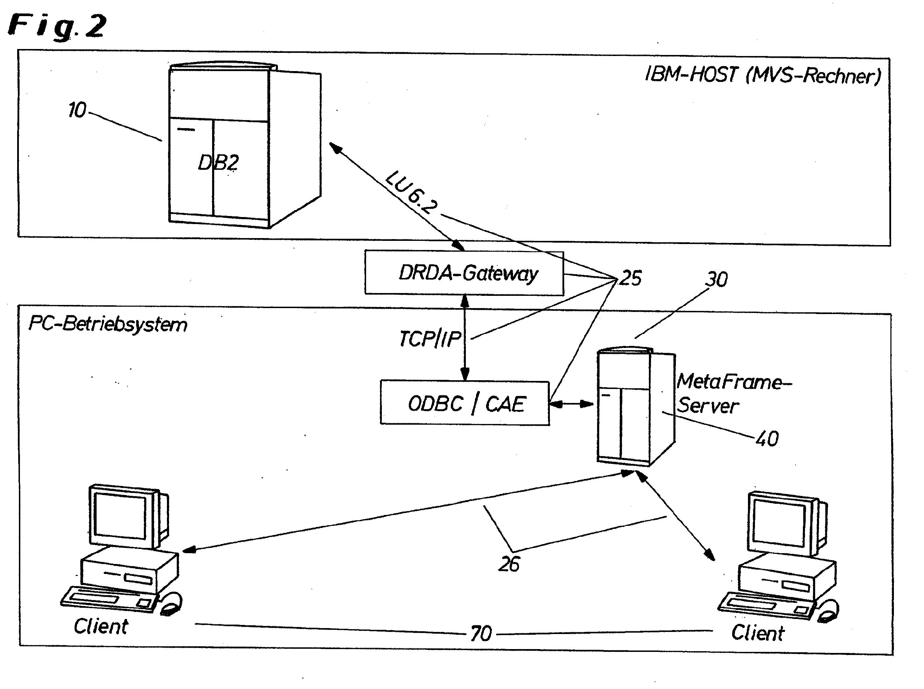

Fig. 1 und 2 zeigen in welcher Netzwerk-Umgebung das erfmdungsgemäße System eingesetzt werden kann.

Fig. 1 zeigt einen HOST. Rechner (MVS-Rechner) mit dem Datenbanksystem DB2 10, ein Kommunikations-Netzwerk 20 und 21 und die Nutzer-Terminals 60.

Der Datenbank-HOST Rechner 10 stellt das Datenbanksystem DB2 bereit, mit den erfindungsgemäß gespeicherten Basisobjekten, Basisdaten, Strukturdaten und ihre Verknüpfungen.

Der Datenbank-HOST Rechner 10 ist über ein Kommunikations-Netzwerk 20 und 21, wie zum Beispiel einem Ethernet, mit den Nutzer-Terminals 60 verknüpft. Die Nutzer Terminals 60 sind zeitgemäße Computer mit der Software inSight® der Firma Arcplan GmbH und Anwendungsdatenblättern, die entsprechend der vorliegenden Erfindung programmiert sind.

Die Nutzer Terminals sind mit einem lokalen Datenspeicher, einer Anzeigeeinrichtung zur Visualisierung von Daten und einer Tastatur oder sonstigen Eingabeeinrichtung (z.B. Maus) zur Eingabe von Informationen ausgestattet.

Fig. 2 zeigt einen Datenbank-HOST Rechner (MVS-Rechner) mit dem Datenbanksystem DB2 10, ein Kommunikations-Netzwerk 25 und 26, einen weiteren Server 30 mit einem computerlesbaren Datenspeicher 40 und die Nutzer-Terminals 70.

Der Datenbank-HOST Rechner 10 stellt das Datenbanksystem DB2 bereit mit den erfindungsgemäß gespeicherten Basisobjekten, Basisdaten, Strukturdaten und ihren Verknüpfungen. Der Datenbank-HOST Rechner 10 ist über ein Kommunikations-Netzwerk 25, wie zum Beispiel ein Ethernet, mit einem multiuserfähigen Server 30 verknüpft.

Der Server 30 ist ein zeitgemäßer, multiuserfahiger Computer, der so programmiert ist, dass er die Software inSight® der Firma Arcplan GmbH mit den entsprechenden Anwendungsdatenblättern der vorliegenden Erfindung für mehrere Nutzer parallel ausführen kann.

Server 30 ist mit einem computerlesbaren Datenspeicher 40 verbunden. Server 30 ist weiterhin über ein Kommunikations-Netzwerk 26, wie zum Beispiel einem Ethernet, mit den oben beschriebenen Nutzer-Terminals 70 verknüpft.

Server 30 ist so programmiert, dass er Befehle von den Nutzer-Terminals 70 empfangen kann, auf die Daten im Datenbank-HOST Rechner 10 zugreifen kann, die abgegriffenen Daten prozessieren kann und die resultierende Anzeige an die Nutzer-Terminals 70 weiterleiten kann, so dass sie auf der Anzeigeeinrichtung der Nutzer-Terminals 70 angezeigt werden können.

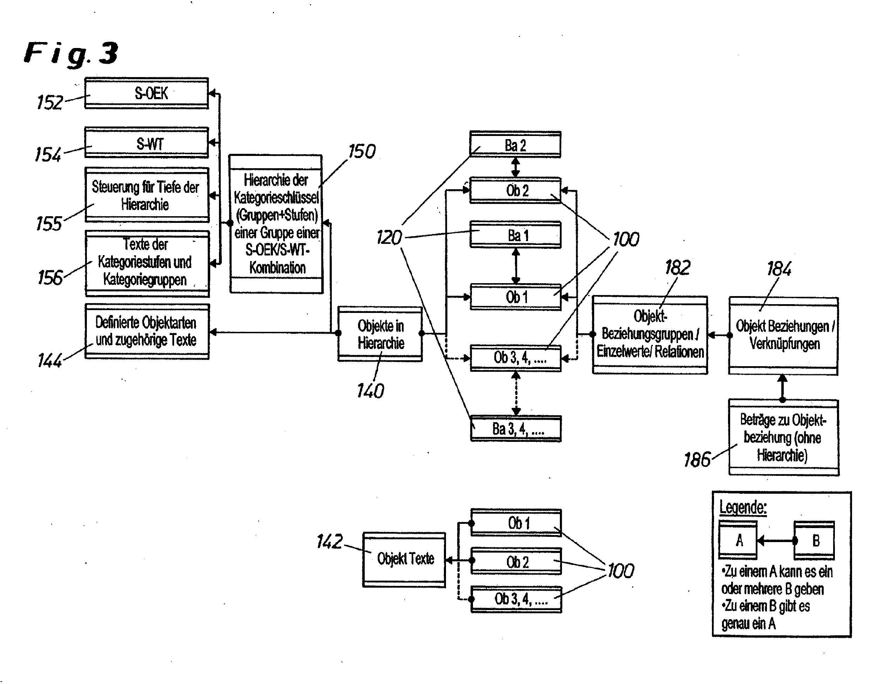

Die Fig. 3 bis 5 geben verschiedene Aspekte eines beispielhaften Datenmodells wieder, nach dem die Basisobjekte den Struktureinheiten in einem multidimensionalen hierarchischen Modell eines Unternehmens oder einer Institution zugeordnet und mit den Basisdaten verknüpft sind. Ein Pfeil zwischen des verschiedenen Kästchen bedeutet eine eindeutige Zuordnung in Richtung des Pfeils und eine mehrdeutige Zuordnung in der dem Pfeil entgegengesetzten Richtung. Die Kästchen repräsentieren im wesentlichen Tabellen, über die die entsprechenden Objekte/Daten miteinander verknüpft sind.

Fig. 3 zeigt einen Ausschnitt aus einem beispielhaften Datenmodell für die hierarchieabhängigen Daten.

Im Zentrum des Datenmodells stehen die Basisobjekte Ob1, Ob2, Ob3, Ob4.....100.

Im linken Bereich von Fig. 3 ist die Zuordnung der Basisobjekte zu den Struktureinheiten abgebildet. Im rechten Teil von Fig. 3 ist die Zuordnung von hierarchieabhängigen Basisdaten zu den Basisobjekten abgebildet.

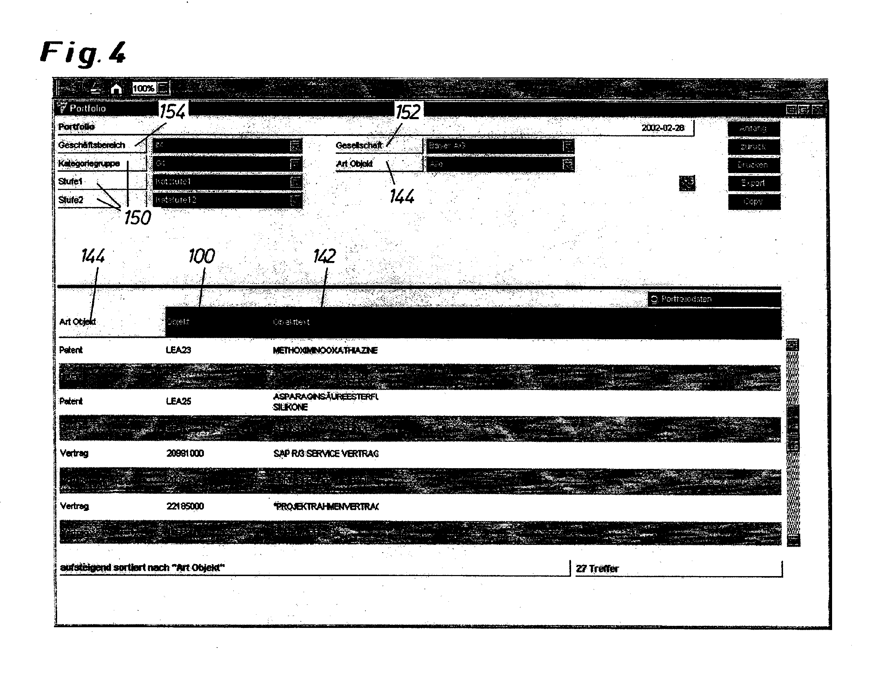

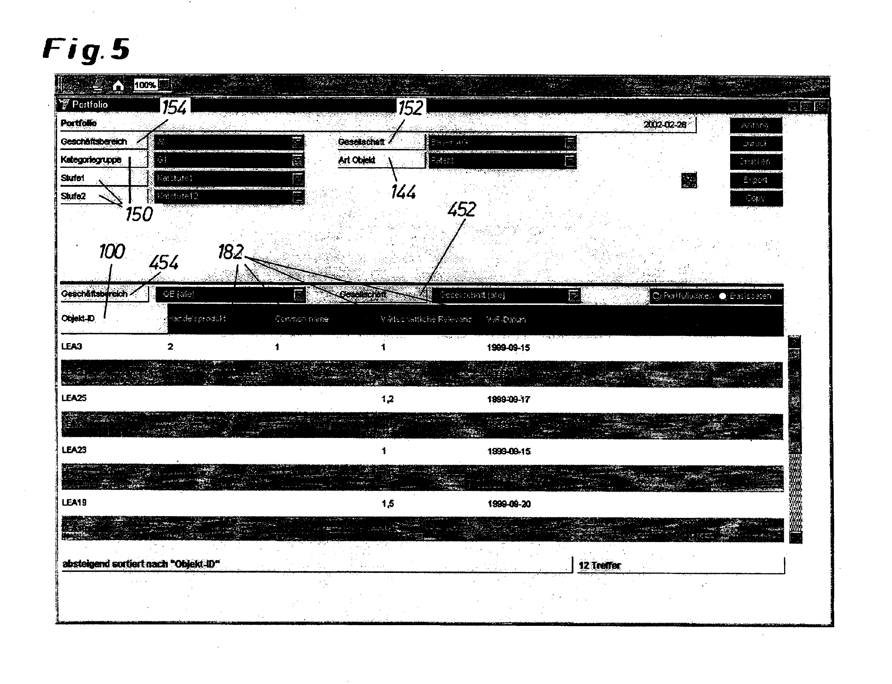

Weiterhin ist jedes Basisobjekt 100 mit hierarchieunabhängigen Basisdaten (Ba1, Ba2, ....) 120 verknüpft, deren Strukturierung in den Fig. 4 und 5 beispielhaft für die Basisobjektarten Patentanmeldungen/Patente und Verträge dargestellt sind.

Jedes Basisobjekt 100 ist mit einer oder mehreren Struktureinheiten aus einer hierarchischen Strukturierung nach ökonomischen und wissenschaftlich/technischen Gesichtspunkten über Verknüpfungstabelle 140 verknüpft. Auf der obersten Hierarchieebene der Strukturierung stehen Struktureinheiten nach ökonomischen Gesichtspunkten, zum Beispiel die Gesellschaften eines Konzerns S-OEK 152 und Struktureinheiten nach wissenschaftlich/technischen Gesichtspunkten S-WT 154 z.B. nach einer Technologie, gleichberechtigt nebeneinander. In der darunterliegenden Hierarchieebene befinden sich die Kombinationen aus S-OEK und S-WT. Jeder dieser Kombinationen aus S-OEK und S-WT sind in der nächsten Hierarchieebene eine oder mehrere Gruppen (z.B. Marketing, Forschung, Einkauf, Technologie XY....) zugeordnet, die nach wissenschaftlich/technischen oder ökonomischen Kriterien ausgewählt sein können. Darunter folgen weitere Hierarchieebenen mit Stufen bis zu beliebiger Tiefe, die eine weitere wissenschaftlich/ technische Strukturierung oder eine Strukturierung nach ökonomischen Kriterien repräsentieren.

In 150 ist diese hierarchische Strukturierung (S-OEK/S-WT, Gruppe, Stufe 1, Stufe 2,....) abgelegt. In 155 ist eine Angabe für die maximale Tiefe der Hierarchie in jeder Gruppe abgelegt und in 156 die Verschlüsselung der Bezeichnung der Gruppen und Stufen. Die maximale Tiefe der Hierarchie 155 dient der Anwendung zur korrekten Steuerung der Anzeige an der Anzeigeinrichtung des Anwendungs-Terminals.

Weiterhin ist jedes Basisobjekt 100 in seiner Hierarchiezuordnung mit einer Schlüsseltabelle 144 zur Art des Basisobjektes (Patentanmeldungen/Patente, Vertrag ...) verknüpft.

Die Zuordnung der Basisobjekte 100 zu den Struktureinheiten in den Hierarchieebenen 140 bewirkt, dass bei Auswahl einer der Struktureinheiten 140 in jeder beliebigen Hierarchieebene alle dieser Struktureinheit zugeordneten Basisobjekte 100 visualisiert werden können.

Unabhängig von ihrer Art sind alle Basisobjekte 100 mit einer Tabelle 142 mit einem sie beschreibenden Text verknüpft. Die redundante Hinterlegung von Basisobjekttexten wie z.B. Titel der Patentanmeldung/des Vertrags in Tabelle 142, ermöglicht eine objekttypübergreifende Suche nach Basisobjekten 100, ohne sich zuvor auf eine Basisobjektart 144 festzulegen.

In 182 sind hierarchieabhängige Basisdaten abgelegt und mit den Basisobjekten 100 verknüpft. Abhängig davon, über welche Struktureinheit die Basisobjekte 100 visualisiert werden, können die zu den Basisobjekten 100 zugehörigen hierarchieabhängigen Basisdaten 182 visualisiert werden. Wenn es sich bei den hierarchieabhängigen Basisdaten 182 z.B. um sensible Geschäftsdaten einer Gesellschaft S-OEK-1 handelt, und ein Basisobjekt 100 z.B. verschiedenen Gesellschaften S-OEK-1 und S-OEK-2 gleichzeitig zugeordnet ist, dann können die hierarchieabhängigen Basisdaten 182 nur visualisiert werden, wenn das Basisobjekt 100 über eine S-OEK-1 zugeordnete Struktureinheit, aufgerufen wird.

Die zu den Basisobjekten 100 zugeordneten hierarchieabhängigen Basisdaten 182 können Einzelwerte z.B. ein Bewertungsfaktor sein oder aber eine ganze Relationen wie z.B. eine Liste von Produkten. Einzelwerte werden direkt in den Objektbeziehungsgruppen 182 abgelegt. Relationen werden in den Objektbeziehungen 184 abgelegt, das heißt, hier wird zum Beispiel angegeben, um welche Produkte es sich in der Liste handelt.

Ergänzend können dann zu den Objektbeziehungen 184 (z.B. zu den Produkten) noch Beträge (186) hinterlegt werden, die über die Identifikationsnummer der Objektbeziehungen, von der Hierarchie unabhängig hinterlegt werden.

Fig. 4 zeigt die Visualisierung einer Struktureinheiten-spezifischen, hierarchischen Datenstrukturierung 150 zusammen mit denen dieser Datenstrukturierung zugeordneten Basisobjekten 100 entsprechend Fig. 3.

Zur Einschränkung der Ergebnismenge einer anwenderdefinierten Suche werden neben der selektiven Auswahl nach Kombinationen 152 S-WT (Gesellschaft) und 154 S-OEK (Geschäftsbereich) als Auswahlkriterien die hierarchische Strukturierung (150, Gruppen und Stufen dieser Gruppe) und die Objektart 144 verwendet. In Fig. 4 wurde für S-OEK "IM" und S-WT "Bayer AG", als hierarchische Strukturierung "G1"/"Katstufe1"/ "Katstufe12" gewählt. Für die Objektart wurde keine Einschränkung (Alle) getroffen.

Nach einer Festlegung auf eine bestimmte Objektart 144, können die hierarchieabhängigen Basisdaten 182 zu den aufgelisteten Objekten 100 eingeblendet werden (siehe Fig. 5).

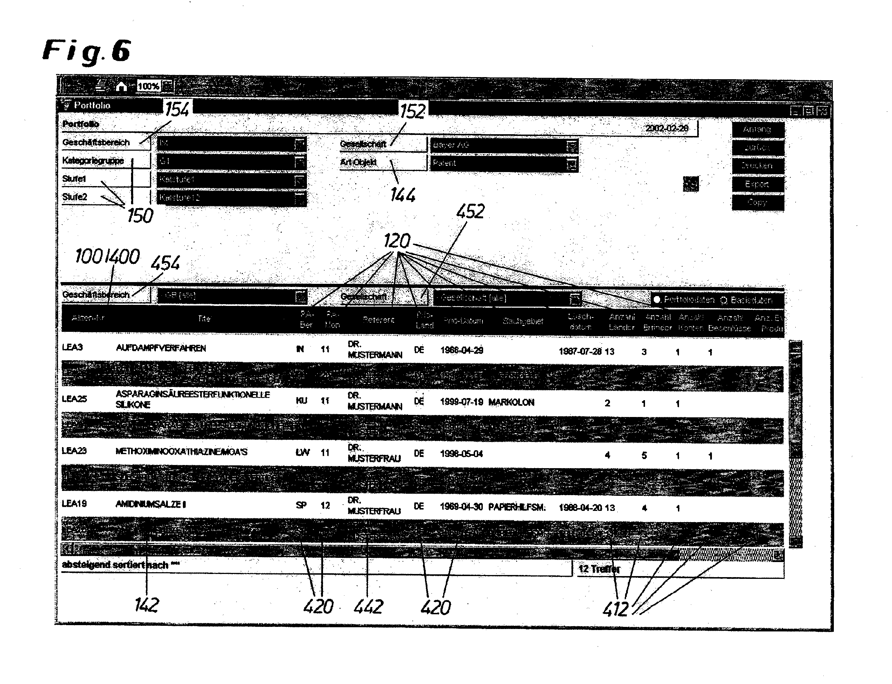

Fig. 5 zeigt die Visualisierung der hierarchieabhängigen Basisdaten 182 aus Fig. 3. Über weitere Drill-Downs können eventuell vorhandene hierarchieabhängige Objektbeziehungen 184 und deren Beträge 186 angezeigt werden. Ebenfalls ist an dieser Stelle eine direkte Anzeige der hierarchieunabhängigen Basisdaten 120 (aus Fig. 3) der angezeigten Objekte möglich (Visualisierung in Fig. 6).

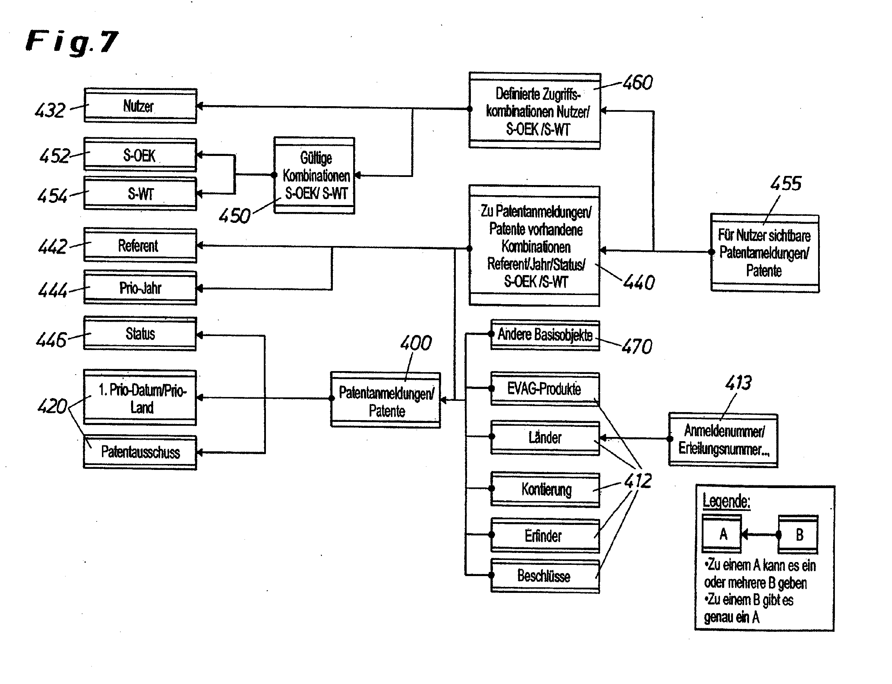

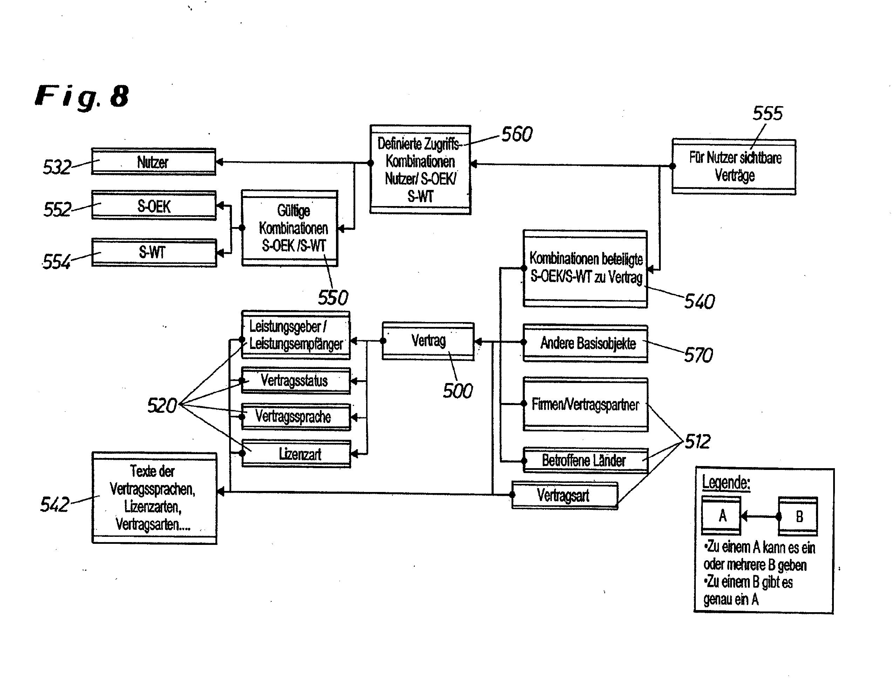

Handelt es sich bei der Objektart 144 um die Objektart eines Basisobjektes Patent (400, Fig. 7) oder Vertrag (500, Fig. 8) können neben den hierarchieabhängigen Basisdaten (120, Fig. 3) auch die hierarchieunabhängigen Basisdaten 412, 413, 420, 442, 444, 446 (Fig. 7) bzw. 512, 520, 542 (Fig. 8) visualisiert werden. Ein Beispiel hierzu für die Basisobjektart Patent gibt Fig. 6.

Fig. 6 zeigt die Visualisierung der hierarchieunabhängigen Basisdaten 120 aus Fig. 3 für die Basisobjektart Patent. Zu jedem Basisobjekt 100 werden entsprechend Fig. 7 Informationen zum Patentausschuss 420, zum Referenten 442, zum Prioritätsland und -datum, sowie zu EVAG-Produkten (=Produkte für die Erfindervergütung gezahlt wird), Ländern, Kontierung, Erfindern und Beschlüssen 412 angezeigt. Außerdem wird jeweils ein Objekttext (Titel) 142 (Fig. 3) angezeigt.

Fig. 7 zeigt exemplarisch im unteren Bereich eine Strukturierung der hierarchieunabhängigen Basisdaten (Ba1, Ba2, ....) 120 aus Fig. 3 für die Basisobjektart Patentanmeldungen/Patente 400 und im oberen Bereich die Realisierung einer selektiven Visualisierungsberechtigung 460 der Basisobjekte 400 für verschiedene Nutzer.

Dem Basisobjekt Patentanmeldung/Patent 400 sind eine Vielzahl von hierarchieunabhängigen Basisdaten 412, 413, 420, 442, 444, 446 zugeordnet. Einige dieser hierarchieunabhängigen Basisdaten 412, 420, 442, 444, 446 liegen als Schlüssellisten in Auswahlmenüs vor und können zur Einschränkung der Ergebnismengen einer anwenderdefinierten Suche nach der Basisobjektart Patentanmeldungen/Patente verwendet werden. In Fig. 7 sind einige hierarchieunabhängige Basisdaten beispielhaft angegeben.

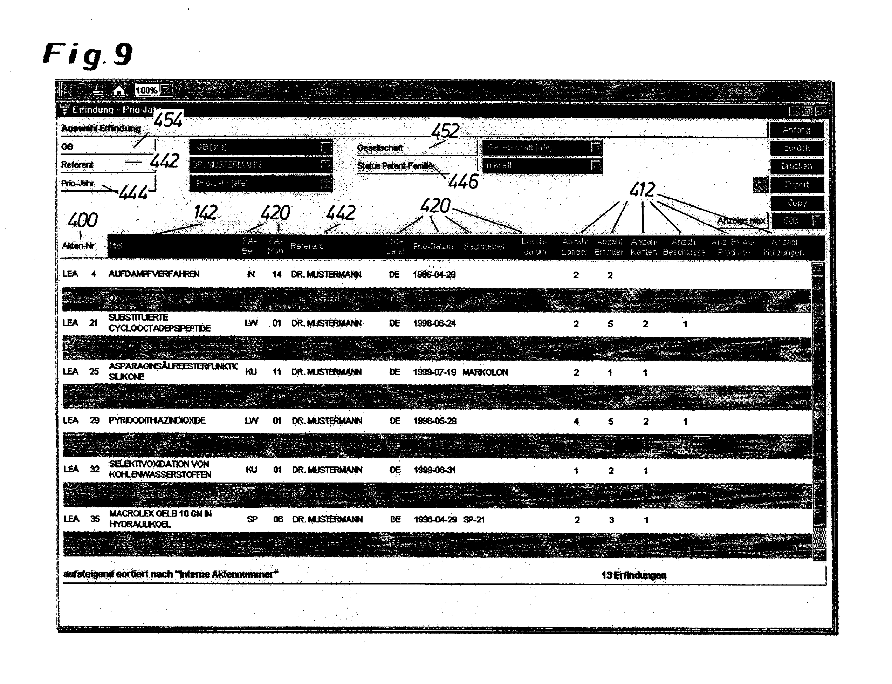

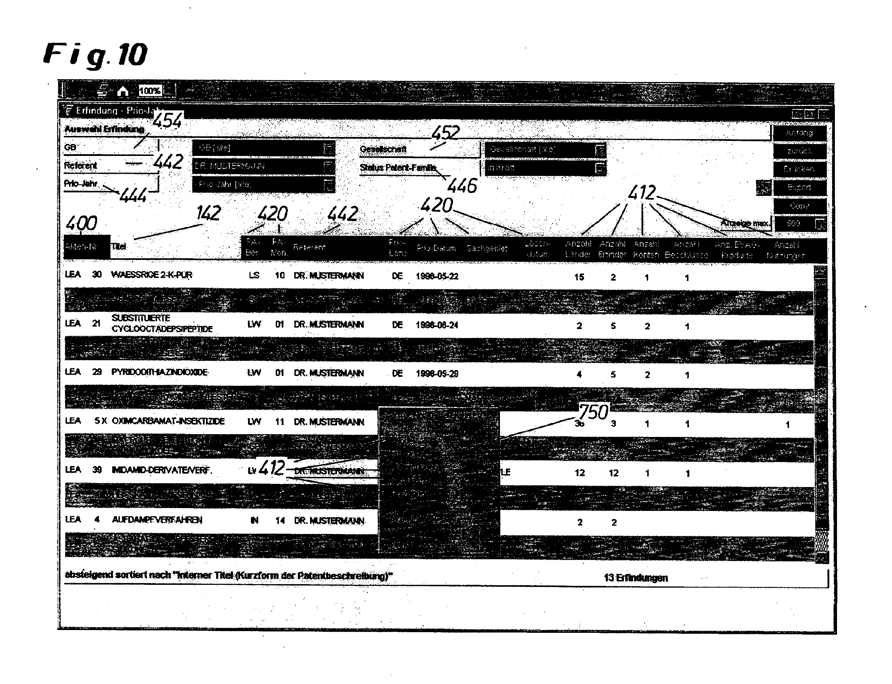

Diese hierarchieunabhängigen Basisdaten unterscheiden sich danach, ob einem Basisobjekt Patentanmeldungen/Patente 400 ein einziges Basisdatum der in dem entsprechenden Kästchen beschriebenen Art zugeordnet wird oder mehrere. Jedem Basisobjekt Patentanmeldungen/Patente 400 ist ein einziges Basisdatum zugeordnet für die Basisdaten 420 "1. Prioritätsdatum und Land der Prioritätsanmeldung", "Patentausschussbereich/Tagungsmonat", 444 Prioritätsjahr, 446 "Status"(in Kraft, abgelaufen, fallengelassen,...), 442 Referent. Weitere solche Basisdaten sind das Löschdatum der gesamten Patentfamilie und die Sachgebietszuordnung im Patentausschuss (Fig. 9 und 10).

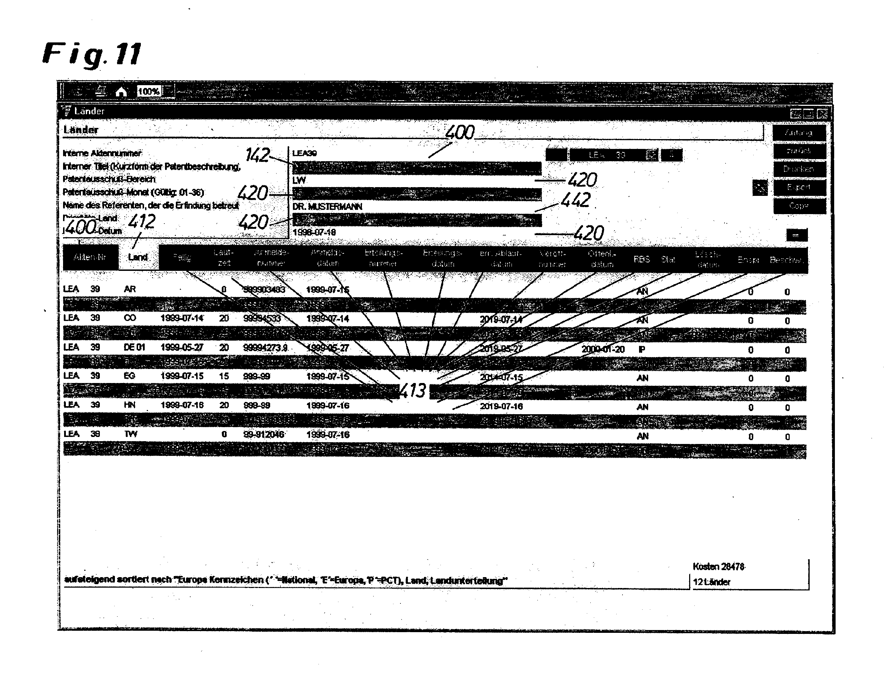

Jedem Basisobjekt Patentanmeldungen/Patente 400 können mehrere Basisdaten zugeordnet sein für die Basisdaten 412 "Produkte für die Erfindervergütung gezahlt wird", "Länder", "Kontierung", "Erfinder", "Beschlüsse des Patentausschuss". Den Ländern sind dann jeweils die Basisdaten 413 "Fälligkeitsdatum für Patentgebühren", "Patentlaufzeiten", "Anmeldenummer und -datum", "Erteilungsnummer und -datum", "Patentablaufdaten", "Veröffentlichungsnummer und -datum", "Stand der Erteilungsverfahren"(Anmeldung, Prüfungsantrag, Patent), "Länderstatus" (X=gelöscht, F=soll fallen), "Löschdatum", Information ob Einspruch oder Beschwerde eingelegt wurde und Löschdatum zugeordnet (Fig. 11).
470 gibt an welche anderen Basisobjekte (z.B. Verträge) mit der Patentanmeldung/Patent 400 verknüpft sind.

Im oberen Bereich von Fig. 7 sind die Zugriffsmöglichkeiten für die Nutzer 432 in Abhängigkeit von den Struktureinheiten der obersten Hierarchieebene S-OEK 452 und S-WT 454 geregelt. Die Tabelle 450 gibt die gültigen Struktureinheiten an, die sich aus Kombinationen von S-OEK 452 und S-WT 454 ergeben. Nur die in Tabelle 460 den einzelnen Kombinationen von S-OEK 452 und S-WT 454 zugeordneten Nutzer 432, können die Basisobjekte 400, die den Struktureinheiten entsprechend derselben Kombination von S-OEK und S-WT zugeordnet sind, visualisieren.

Die tatsächlich für den einzelnen Nutzer visualisierten Basisobjekte in 455 ergeben sich aus der Schnittmenge der Basisobjekte aus 460 und der Basisobjekte, die in 440 als Kombination von Basisobjekten mit einem bestimmten Bearbeiter 442, einer Prioritätsjahreszahl 444 und dem Status mit bestimmten S-OEK und S-WT vorliegen.

Fig. 8 zeigt exemplarisch im unteren Bereich eine Strukturierung von hierarchieunabhängigen Basisdaten (Ba1, Ba2, ....) 120 aus Fig. 3 für die Basisobjektart Vertrag 500 und im oberen Bereich die Realisierung einer selektiven Visualisierungsberechtigung der Basisobjekte 500 für verschiedene Nutzer.

Dem Basisobjekt Vertrag 500 sind eine Vielzahl von hierarchieunabhängigen Basisdaten 512, und 520 zugeordnet. Diese hierarchieunabhängigen Basisdaten liegen als Schlüssellisten in Auswahlmenüs vor und können zur Einschränkung der Ergebnismengen einer anwenderdefinierten Suche verwendet werden. In Fig. 8 sind einige hierarchieunabhängigen Basisdaten beispielhaft angegeben.

Diese hierarchieunabhängigen Basisdaten unterscheiden sich danach, ob einem Basisobjekt Vertrag 500 ein einziges Basisdatum der in dem entsprechenden Kästchen beschriebenen Art zugeordnet wird oder mehrere. Jedem Basisobjekt Vertrag 500 ist ein einziges Basisdatum zugeordnet für die Basisdaten 520 "Leistungsgeber/Leistungsempfänger", "Vertragsstatus", "Vertragssprache", "Lizenzart".

Jedem Basisobjekt Vertrag 500 können Listen von Basisdaten zugeordnet sein für die Basisdaten 512 Firmen/Vertragspartner", "Betroffene Länder" oder "Vertragsart".

570 gibt an, welche anderen Basisobjekte (z.B. Patente) mit dem Vertrag 500 verknüpft sind.

Im oberen Bereich von Fig. 8 sind die Zugriffsmöglichkeiten für die Nutzer 532 in Abhängigkeit von den Struktureinheiten der obersten Hierarchieebene S-OEK 552 und S-WT 554 geregelt. Die Tabelle 550 gibt die gültigen Struktureinheiten an, die sich aus Kombinationen von S-OEK 552 und S-WT 554 ergeben. Nur die in Tabelle 560 den einzelnen Kombinationen von S-OEK 552 und S-WT 554 zugeordneten Nutzer 532, können die Basisobjekte 500, die den Struktureinheiten entsprechend derselben Kombination von S-OEK und S-WT zugeordnet sind, visualisieren.

Die tatsächlich für den Nutzer visualisierten Basisobjekte in 555 ergeben sich aus der Schnittmenge der Basisobjekte aus 560 und der Basisobjekte, die in 540 als zu einer bestimmten Kombination S-OEK 552 und S-WT 554 vorliegen.

Die Fig. 9 bis 13 zeigen Ergebnisse der selektiven Visualisierung eines Patentportfolios mit einem erfindungsgemäßen System.

Fig. 9 zeigt die Visualisierung einer Gruppe von Patentanmeldungen/Patenten 400 als Basisobjekte 455 entsprechend Fig. 7. Zur Einschränkung der Ergebnismenge einer anwenderdefinierten Suche nach der Basisobjektart Patentanmeldungen/Patente werden neben der selektiven Auswahl nach Kombinationen 452 S-WT (Gesellschaft) und 454 S-OEK (Geschäftsbereich) als Auswahlkriterien der Referent 442, das Prioritätsjahr 444 und der Status 446 verwendet. Als Referent 442 wurde Dr. Mustermann ausgewählt und als Status 446 "in Kraft". Für das Prioritätsjahr 444, S-OEK 452 und S-WT 454 wurde keine Auswahl getroffen, sondern "alle" gewählt. Je nachdem welcher Nutzer 432 die Visualisierung durchführt, wird die Zahl der sichtbaren Basisobjekte 455 gegenüber der nach den Kriterien gefundenen Gesamtzahl in 440 noch mal entsprechend der Zugriffsberechtigung des Nutzers eingeschränkt (siehe Fig. 7).

Die ausgewählten und visualisierten Patente 400 sind mit dem Titel (Objekt Text 142 aus Fig. 3) und einigen hierarchieunabhängigen Basisdaten 420 (Patentausschuss Bereich/Tagungsmonat; 1. Prioritätsdatum und Prioritätsland, Sachgebietszuordnung im Patentausschuss, Löschdatum), 442 Referent und 412 (Länder; Erfinder; Konten; Beschlüsse; Produkte für die Erfindervergütung gezahlt wird (EVAG-Produkte)) visualisiert.

Zu den hierarchieunabhängigen Basisdaten 412 ist in Fig. 9 allerdings nur angegeben wie viele Daten in der zugehörigen Liste zu finden sind. Die Liste selber mit diesen Basisdaten 412 kann für jedes Patent 400 separat durch ein Drill-down Menü 750 (Fig. 10) abgefragt werden.

Wird in dem Drill-down Menü 750 in Fig. 10 zum Beispiel "Länder" gewählt, so erhält man eine Auflistung mit den Ländern, in denen Patentanmeldungen/Patente zum Basisobjekt 400 existieren (siehe beispielhaft Fig. 11). Hier erscheinen dann auch weitere hierarchieunabhängige Basisdaten wie die Liste der Länder 412 und zu diesen Ländern die Basisdaten 413 "Fälligkeitsdatum für Patentgebühren", "Patentlaufzeiten", "Anmeldenummer und "-datum", "Erteilungsnummer und -datum", "Patentablaufdaten", "Veröffentlichungsnummer und -datum", "Stand der Erteilungsverfahren"(Anmeldung, Prüfungsantrag, Patent), "Status" (X=gelöscht, F=soll fallen), "Löschdatum", Information ob Einspruch oder Beschwerde eingelegt wurde und Löschdatum. Gleichzeitig erscheinen dieselben ausgewählten Basisdaten 420, 442 und der Objekttext 142 wie im Kopf in Fig. 9 und 10 auch.

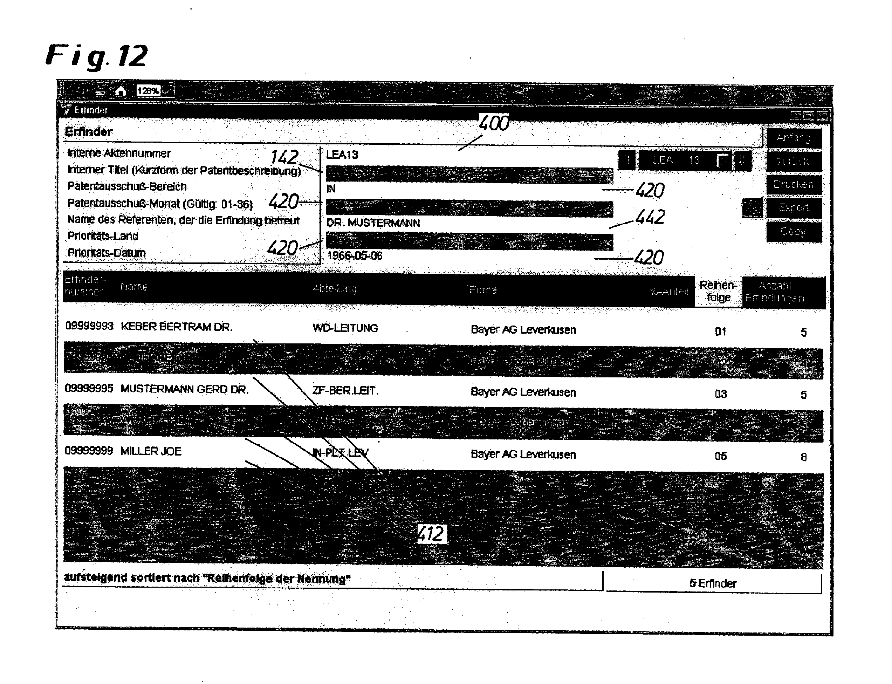

Wird in dem Drill-down Menü 750 in Fig. 10 zum Beispiel "Erfinder" gewählt, so erhält man eine Auflistung mit den zu dem ausgewählten Patent zugehörigen Erfindern 412 (Fig. 12). Jedem Erfinder ist die Zahl der Patentanmeldungen/Patente, an denen er beteiligt ist zugeordnet. Sie ist in der letzten Spalte in Fig. 12 angegeben.

Gleichzeitig erscheinen dieselben ausgewählten Basisdaten 420, 442 und der Objekttext 142 wie im Kopf in Fig. 9, 10 und 11 auch.

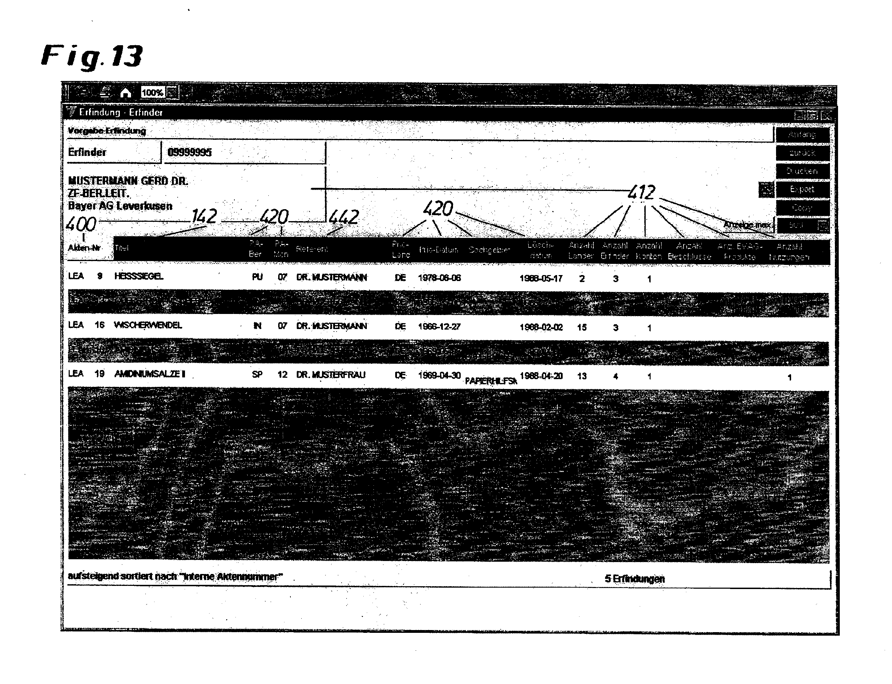

Die Visualisierung der zu einem ausgewählten Erfinder (Dr. Gerd Mustermann) zugeordneten Patente sind mit einigen Basisdaten wie in Fig. 9 oder 10 in Fig. 13 dargestellt. Zur Einschränkung der Ergebnismenge der anwenderdefinierten Suche nach der Basisobjektart Patentanmeldungen/Patente wurde hier als Auswahlkriterien lediglich der Erfinder 412 verwendet.

## Patentansprüche

1. System zur Visualisierung eines Portfolios enthaltend einen computerlesbaren Datenspeicher mit einem Datenbanksystem mit darin gespeicherten Basisobjekten (100, 400, 500), die jedes eindeutig mit einem oder mehreren Basisdaten (120, 412, 420, 512, 520) verknüpft sind,
wobei die Basisobjekte (100, 400, 500) einer oder mehreren Struktureinheiten (152, 154, 150) in einem multidimensionalen hierarchischen Modell eines Unternehmens oder einer Institution zugeordnet sind (140), und die Struktureinheiten (152, 154, 150) in einer relationalen Datenbank gespeichert sind und die Basisobjekte (100), die den einzelnen Struktureinheiten (152, 154, 150) zugeordnet sind mit einem oder mehrere Basisdaten (120) selektiv oder insgesamt visualisiert werden können.

2. System nach Anspruch 1, **dadurch gekennzeichnet, dass** in dem Datenbanksystem ein oder mehrere Nutzer (432, 532) gespeichert sind und jeweils einer oder mehreren der gespeicherten Struktureinheiten (452, 454, 450; 552, 554, 550) zugeordnet sind und diesem Nutzer (432, 532) nur die selektive Visualisierung von Basisobjekten (455, 555) möglich ist, die zu den Struktureinheiten gehören, die diesem Nutzer (432, 532) zugeordnet sind.

3. System nach Anspruch 1 oder 2, **dadurch gekennzeichnet, dass** die Basisdaten (120, 412, 420, 512, 520) hierarchieabhängig und/oder hierarchieunabhängig sind.

4. System nach einem der Ansprüche 1 bis 3, **dadurch gekennzeichnet, dass** mindestens ein Basisobjekt (100, 400, 500) mit einem oder mehreren anderen Basisobjekten (100, 400, 500) verknüpft ist.

5. System nach einem der Ansprüche 1 bis 4, **dadurch gekennzeichnet, dass** verschiedene Basisobjekte (100, 400, 500) mit derselben Hierarchie (140) verknüpft sind.

6. System nach einem der Ansprüche 1 bis 5, **dadurch gekennzeichnet, dass** die Basisobjekte (100, 400, 500) Patentanmeldungen/Patente (400), Verträge (500) oder Produkte sind.

7. System nach einem der Ansprüche 1 bis 6, **dadurch gekennzeichnet, dass** die Basisobjekte (100, 400, 500) Patentanmeldungen/Patente (400) sind und die Basisdaten (120, 412, 420) Prioritätsdaten, Länder in den angemeldet wurde und für diese Länder jeweils Anmeldenummer und -datum, Veröffentlichungsnummer und -datum, Erteilungsnummer und -datum, Fälligkeitsdatum für Patentgebühren, Laufzeiten, Patentablaufdaten, Prüfungsantragsdaten, Information ob Einspruch oder Beschwerde eingelegt wurde, Löschdatum, Anmelder und/oder Erfinder enthalten.

8. System nach einem der Ansprüche 1 bis 6, **dadurch gekennzeichnet, dass** die Basisobjekte (100, 400, 500) Patentanmeldungen/Patente (400) sind und die Basisdaten (120, 412, 420) Informationen zur Organisation und Abrechnung von Aktivitäten zu Patentanmeldungen/Patenten innerhalb des Unternehmens oder der Institution enthalten, wie Entscheidungsgremien und deren Beschlüsse, interne Entscheidungstermine, Produkte für die Erfindervergütung gezahlt wird, Kontierungen für die Abrechnung der Kosten, zuständiger Patentanwalt oder Referent, Status der gesamten Patentfamilie (in Kraft, abgelaufen, fallengelassen...).

9. System nach einem der Ansprüche 1 bis 6, **dadurch gekennzeichnet, dass** die Basisobjekte Verträge (500) sind, und die Basisdaten (120, 512, 520) Informationen zu Vertragsart, Lizenzart, Vertragspartner, Leistungsgeber/Leistungsempfänger, Vertragsbeginn, Vertragsende, Unterschriftsdaten, Gegenstand des Vertrags, Vertragsstatus (z.B. in Kraft, beendet...), Vertragssprache, betroffene Länder enthalten.

10. System nach einem der Ansprüche 1 bis 6, **dadurch gekennzeichnet, dass** die Basisobjekte (100) Produkte sind, und die Basisdaten (120) Informationen zu den Produkten wie Umsätze, Gewinn enthalten.

11. System nach einem der Ansprüche 1 bis 10, **dadurch gekennzeichnet, dass** das multidimensionale, hierarchische Modell eine wissenschaftlich/technisch bedingte Strukturierung und eine ökonomisch bedingte Strukturierung des Unternehmens oder der Institution abbildet.

12. System nach einem der Ansprüche 1 bis 11, **dadurch gekennzeichnet, dass** sich der computerlesbare Datenspeicher in einem Zentralrechner (10) befindet, der mit einem oder mehreren Nutzer-Terminals (60, 70), die mindestens eine Eingabeeinrichtung und eine Anzeigeeinrichtung zur Visualisierung der selektierten Basisobjekte (100) aufweisen, so verbunden ist, dass elektronisch Daten zwischen dem Zentralrechner (10) und den Nutzer-Terminals (60, 70) ausgetauscht werden können.
